(19) Europäisches Patentamt

European Patent Office

Office européen des brevets

(11) Veröffentlichungsnummer: **0 342 256 B1**

(12) **EUROPÄISCHE PATENTSCHRIFT**

(45) Veröffentlichungstag der Patentschrift: **29.07.92**

(21) Anmeldenummer: **88108001.4**

(22) Anmeldetag: **19.05.88**

(51) Int. Cl.⁵: **B23Q 3/10**, B23Q 3/18

(54) **Anlageleiste mit Passbohrungen.**

(43) Veröffentlichungstag der Anmeldung:
**23.11.89 Patentblatt 89/47**

(45) Bekanntmachung des Hinweises auf die
Patenterteilung:
**29.07.92 Patentblatt 92/31**

(84) Benannte Vertragsstaaten:
**AT BE CH DE ES FR GB IT LI LU NL SE**

(56) Entgegenhaltungen:
**EP-A- 0 074 565**
**EP-A- 0 237 490**
**DE-B- 2 139 437**
**FR-A- 2 158 240**
**FR-A- 2 403 161**

(73) Patentinhaber: **3R Management ab**
**Sorterargatan 1**
**S-162 26 Vällingby(SE)**

(72) Erfinder: **Nielsen Robert**
**Nysätra Väg 2**
**131 33 Nacka(SE)**
Erfinder: **Tryggve Niemi**
**Hallonvägen 46**
**196 31 Kungsängen(SE)**

(74) Vertreter: **Zinngrebe, Horst, Dr.rer.nat.**
**Saalbaustrasse 11**
**W-6100 Darmstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft eine Leiste zum maßgenauen Festlegen eines mit Paßbohrungen versehenen Bauteils auf einer mit Paßbohrungen versehenen Spannplatte, mit wenigstens zwei parallelen ersten Paßbohrungen von vorgegebenem Mittenabstand.

Zum Einrichten von Werkstücken zur anschließenden Bearbeitung durch eine Werkzeugmaschine dienen gemäß EP-A 237 490 Präzisions-Anlageleisten mit mehreren Paßbohrungen, welche mittels Spann- oder Spreizbolzen auf einer mehrerer Paßbohrungen aufweisenden Spannplatte aufgespannt werden können. Derartige Spannplatten besitzen eine exakt plane Oberfläche und die Leiste weist im allgemeinen zwei gegenüberliegende planparallele Oberflächen auf, welche einen vorgegebenen Abstand voneinander haben. Um das Werkstück auf der Spannplatte in einer vorgegebenen Höhe über der Spannplatte festspannen zu können sind plattenförmige, winkelförmige oder prismatische sogenannte Normalien unterschiedlicher Abmessungen im Gebrauch, welche mit Paßbohrungen versehen sind und daher mittels Spannbolzen auf der Spannplatte festgelegt werden können. Diese Normalien besitzen exaktplane Referenzflächen, welche einen vorgegebenen, genauen Abstand zueinander oder eine vorgegebene genaue Lage zueinander besitzen. Die Außenabmessung der zum Einrichten eines Werkstücks benutzten Normalie bestimmt sich nach den Abmessungen des Werkstücks, der Art seiner nachfolgenden Bearbeitung und seiner Aufbaumöglichkeit auf der Spannplatte.

Um die Spannplatte möglichst vielseitig verwendbar zu machen, sind in sie mehrere Paßbohrungen eingebracht, die beispielsweise in einem Raster mit vorgegebenem Rastermaß über die Spannplatte verteilt sein können. Andererseits entspricht der Mittenabstand der in den Normalien vorgesehenen Paßbohrungen häufig nicht dem Rastermaß oder einem der Mittenabstände der Paßbohrungen in der Spannplatte, so daß mit einer Spannplatte nur Normalien bestimmter Lage der Paßbohrungen verwendet werden können. Andererseits ist es zum Ausgleich der unterschiedlichen Mittenabstände auch möglich, zwischen die Spannplatte und die Normalien Zwischenstücke zu legen, die mit einer oder mehreren Paßbohrungen sowie mit einem Schlitz versehen sind. Diese Zwischenstücke haben jedoch den Nachteil, daß sie entweder eine universelle Verwendbarkeit von Normalien unterschiedlicher Abmessungen nicht gestatten oder ihre eindeutige Festlegung auf der Spannplatte schwierig ist.

Der Erfindung liegt daher die Aufgabe zugrunde, die eingangs genannte Leiste derart auszubilden, daß mit ihr Nomalien oder dergleichen Bauteile mit über einen weiten Bereich unterschiedlichen Paßbohrungs-Abständen auf der Spannplatte durch eine einfache Handhabung und mit exakter Maßhaltigkeit aufgespannt werden könen.

Bei einer Leiste mit wenigstens zwei parallelen ersten Paßbohrungen von vorgegebenem Mittenabstand ist dazu erfindungsgemäß vorgesehen, daß an der Leiste ein Ausgleichsstück verschiebbar geführt und an die Leiste anspannbar ist, welches mit einer weiteren, zu den ersten Paßbohrungen parallelen Paßbohrung versehen ist. Damit wird wird es möglich, beispielsweise eine Normalie mit einer ihrer Paßbohrungen gegebenenfalls über ein Distanzstück auf der Spannplatte mittels eines Spreizbolzens oder dgl. und mit ihrer zweiten Paßbohrung über das Ausgleichsstück an der Spannplatte festzulegen, wobei der Mittenabstand der Paßbohrungen der Normalien beliebig innerhalb weiter, durch die Führung des Ausgleichsstücks an der Leiste bestimmter Grenzen liegen kann.

Zweckmäßig ist das Verbindungsstück parallel zu der Mittenverbindungslinie der beiden ersten Paßbohrungen verschiebbar an der Leiste gehalten. Dadurch wird ein relativ weiter Bereich an Bauteilen unterschiedlicher Abmessungen an der Spannplatte festlegbar. Ferner empfiehlt es sich, dem Ausgleichsstück eine axiale Stärke zu geben, die exakt gleich der Stärke der Leiste ist. Wenn das Ausgleichsstück in bevorzugter Weiterbildung der Erfindung zwei gegenüberliegende planparallele Oberflächen hat, die ebene Fortsetzungen gegenüberliegender planparalle Oberflächen der Leiste sind, kann das Bauteil sowohl auf das Ausgleichsstück wie auch auf die Leiste aufgelegt werden.

Die Erfindung ist mit besonderem Vorteil an einer Spannplatte einsetzbar, die ein Raster aus mehreren dritten Paßbohrungen aufweist, wobei dann der Mittenabstand der beiden ersten Paßbohrungen gleich einem ganzzahligen Vielfachen des Rastermaßes ist.

Wenn in Weiterbildung der Erfindung die Leiste zwei einander gegenüberliegende planparallele Oberflächen und eine sich senkrecht zu den Oberflächen erstreckende Seitenfläche besitzt, gegen welche das Ausgleichsstück mit einer ebenen, sich parallel zur Mittellinie seiner Paßbohrung erstreckenden Seitenflächen spannbar ist, kann das Ausgleichsstück in einer für ein bestimmtes Bauteil erforderlichen Lage an der Leiste definiert festgelegt werden.

Gemäß einer bevorzugten Ausgestaltung der Erfindung steht aus einer Seitenfläche des Ausgleichsstücks ein im Querschnitt T-förmiger Steg vor, und die Leiste weist eine im Querschnitt T-förmige, zweckmäßig in einem Führungskörper ausgebildete Nut auf, die zu der dem Ausgleichsstück benachbarten Seitenfläche der Leiste zur Aufnahme des Steges offen ist.

Um ein definiertes und genaues Anspannen des Ausgleichsstücks an die Leiste zu gewährleisten, ist in besonders bevorzugter Ausgestaltung der Erfindung vorgesehen, das der Führungskörper in einer zum Ausgleichsstück offenen Tasche gehalten ist, deren Tiefe größer ist als die Tiefe des Führungskörpers, wobei dann wenigstens ein Arretierbolzen für das Ausgleichsstück sich auf der Leiste, etwa auf ihrer dem Ausgleichsstück gegenüberliegenen Seite, abstützen und in ein Gewinde im Führungskörper eingreifen kann.

Zweckmäßg ist an einem Ende der Leiste ein Winkel mit einer weiteren ersten Paßbohrung ausgebildet, deren Mittenabstand von der Mittenverbindungslinie ein ganzzahliges Vielfaches des Rastermaßes beträgt.

Wenn in bevorzugter Ausgestaltung der Erfindung die T-förmige Nut zusätzlich an einem ihrer Enden nach außen offen ist, können in die Leiste verschiedene Ausgleichsstücke eingeschoben werden, die sich voneinander in der Lage ihrer Paßbohrung relativ zur Mittenverbindungslinie unterscheiden. Damit werden Normalien an die Spannplatte anspannbar, deren Paßbohrungen in zwei zueinander senkrechten Richtungen von dem Rastermaß der Spannplatte abweichen.

Mit besonderem Vorteil ist zur Verwendung mit der erfindungsgemäßen Leiste ein Ausgleichswinkel geeignet, längs dessen einem Schenkel zwei beabstandete Paßbohrungen eingebracht sind, und in dessen anderem Schenkel eine weitere Paßbohrung vorgesehen ist, wobei die Verbindungslinie der Paßbohrungen senkrecht auf der Verbindungslinie der weiteren Paßbohrung mit der benachbarten Paßbohrung steht und der Mittenabstand der weiteren Paßbohrung zur Mitte der benachbarten Paßbohrung gleich dem Mittenabstand der weiteren Paßbohrung des Ausgleichsstücks zur Mittenverbindungslinie der ersten Paßbohrungen ist.

Die Erfindung wird nachstehend anhand des in der beigefügten Zeichnung dargestellten Ausführungsbeispiels im einzelnen beschrieben. Es zeigen:

Fig. 1 eine Draufsicht auf eine Leiste mit Ausgleichswinkel und Normalienplatte, welche auf eine Spannplatte aufgespannt ist;

Fig. 2 eine Draufsicht auf die Leiste;

Fig. 3 einen Schnitt längs der Linie III/III aus Fig. 2;

Fig. 4 eine Draufsicht auf den Ausgleichswinkel nach Fig. 1 und

Fig. 5 einen Schnitt durch den Ausgleichswinkel längs der Linie V-V.

Die Erfindung wird nachstehend anhand einer Palettierung einer rechtwinkligen, beispielsweise im Formenbau verwendeten Normalienplatte beschrieben, ohne jedoch auf diese Anwendung beschränkt zu sein.

Eine rechtwinkelige Spannplatte 40 mit exakt planer Oberfläche 45 besitzt in einem quadratischen Raster angeordnete Durchgangs-Paßbohrungen jeweils gleichen Durchmessers, von denen vier im kleinsten Rastermaß quadratisch zu einander liegende Paßbohrungen mit 41, 42, 43 und 44 bezeichnet sind. Mittig zwischen den Paßbohrungen sind mit Innengewinde versehene Löcher in die Spannplatte 40 eingebracht, von denen eines mit 46 bezeichnet ist. Zur Unterscheidung von gleichartigen Durchgangspaßbohrungen in anderen noch zu beschreibenden Bauteilen werden die Paßbohrungen der Spannplatte 40 nachfolgend summarisch "dritte" Paßbohrungen genannt.

Eine langgestreckte Leiste 10 mit an einem Ende angeformtem Winkel 9 überdeckt im dargestellten Ausführungsbeispiel drei in einer Richtung benachbarte dritte Paßbohrungen und ist mit zwei Durchgangspaßbohrungen 11, 12 versehen. Die Leiste 10 besitzt ferner zwei einander gegenüberliegende planparallele Oberflächen 15, 16, die sich senkrecht zu jeder der Mitellinien der beiden Paßbohrungen 11, 12 erstrecken. Auf der Seite des Winkels 9 geht die eine der planparallelen Oberflächen 15 in eine erste Seitenfläche 18 und die gegenüberliegende Oberfläche 16 in eine zweite Seitenfläche 19 über. Beide Seitenflächen 18, 19 liegen in einer zu der Mittenverbindungslinie 13 der Paßbohrungen 11, 12 parallelen Ebene und erstrecken sich senkrecht zu den Oberflächen 15, 16.

Zwischen den Seitenflächen 18, 19 öffnet eine im Querschnitt rechtwinkelige Tasche 36, die in die Leiste 10 eingeschnitten ist und sich vom Winkel 9 ausgehend in Längsrichtung der Leiste 10 erstreckt. In der Tasche 36 ist ein im wesentlichen rechteckiger Führungskörper 34 beherbergt, der die Tasche 36 praktisch vollständig ausfüllt, jedoch eine Tiefe hat, die etwas kleiner als die Tiefe der Tasche 36 ist. In den Führungskörper 34 sind zwei über seine Länge beabstandete mit Innengewinde versehene Löcher eingebracht, von denen in Figur 3 das Gewindeloch 35 zu erkennen ist.

In das Gewindeloch 35 greift der Gewindezapfen 51 eines Arretierbolzens 50 ein, welcher die Leiste 10 durch eine Öffnung 8 zu der den Seitenflächen 18, 19 gegenüberliegenden Seite hin durchdringt und dort einen die Öffnung 8 radial überdeckenden Ring 52 aufweist. Der Ring 52 ist, wie dargestellt, teilweise in einer Ausnehmung 7 der Leiste 10 eingefangen. An dem dem Gewindezapfen 51 abgewandten Ende ist an dem Arretierbolzen 50 ein Handgriff 53 unverdrehbar befestigt. Demzufolge kann der Führungskörper 34 durch Eindrehen des Gewindezapfens 51 in das Gewindeloch 35, was durch entsprechende Manipulation am Handgriff 53 gelingt, in die Tasche 36 hineingezogen werden, bis dessen Oberseite 37 gegen den Boden 38 der Tasche 36 anliegt.

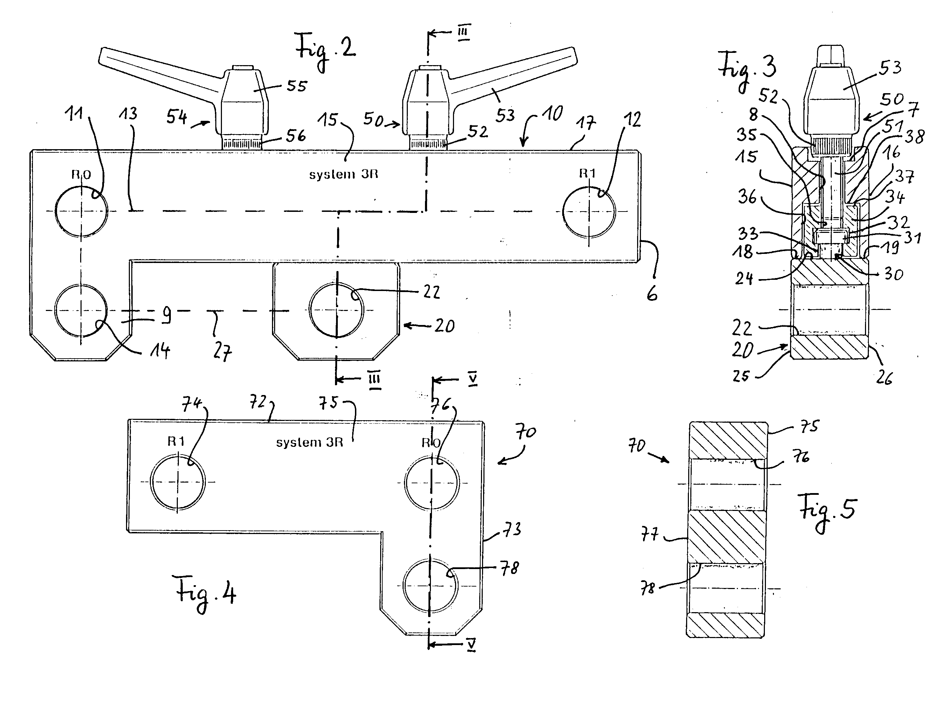

Von einem zweiten Arretierbolzen 54, der dem Arretierbolzen 50 glicht, ist in Figur 2 nur sein Handgriff 55 und sein Ring 56 zu erkennen. Jedenfalls greift der nicht dargestellte Gewindezapfen des zweiten Arretierbolzens 54 in das zweite nicht dargestellte Gewindeloch im Führungskörper 34 ein und erstreckt sich durch eine der Öffnung 8 entsprechende Öffnung in der Leiste.

In den Führungskörper 34 ist eine im Querschnitt T-förmige Nut 32 mittig eingeschniten, die sich im wesentlich über die ganze Länge des Führungskörpers 34 erstreckt und deren Schaft 33 mittig zwischen den Seitenflächen 18, 19 offen ist. Der Führungskörper 34 hat eine Länge innerhalb der Tasche 36, die natürlich größer ist als der Abstand der Gewindelöcher und im wesentlichen gleich der Länge der Tasche 36 sein kann. Die Tasche 36 endet an dem Winkel 9 und ist am gegenüberliegenden Ende zur Stirnseite 6 der Leiste 10 hin offen.

Im freien Endbereich des Winkels 9 ist eine dritte Paßbohrung 14 in die Leiste 10 eingebracht, welche sich parallel zu den beiden anderen Paßbohrungen 11, 12 der Leiste 10 erstreckt. Der Abstand der Mittellinie der dritten Paßbohrung zu der Mittenverbindungslinie 13 kann ein ganzzahliges Vielfaches des kleinsten Rastermaßes betragen, hat im dargestellten Ausführungsbeispiel jedoch eine davon abweichende, noch zu erläuternde Größe. Im übrigen bilden die drei Paßbohrungen 11, 12 und 14 einen rechten Winkel. Zur Unterscheidung werden die Paßbohrungen 11, 12 und 14 der Leiste 10 nachfolgend summarisch "erste" Paßbohrungen genannt.

Ein im großen und ganzen rechtwinkliges Arretierstück 20 hat eine mittige Paßbohrung 22, welche jeder der ersten und dritten Paßbohrungen gleicht. Das Ausgleichsstück 20 hat in Richtung der Mittellinie seiner Paßbohrung 22 eine Stärke, die gleich dem Abstand der Oberflächen 15, 16, also gleich der Stärke der Leiste 10 ist. Das Arretierstück 20 weist eine ebene Anlagefläche 24 auf, die sich parallel zur Mittellinie der Paßborhung 22 erstreckt und dazu bestimmt ist, gegen die Seitenflächen 18, 19 in noch zu beschreibenderweise angespannt zu werden. Aus der Anlagefläche 24 steht mittig einem ganzen mit 30 bezeichneter T-förmiger Steg 30 vor, dessen Form der Form der Nut 32 angepaßt ist. Mithin kann der T-förmige Steg 30 durch eine seitliche Öffnung der Tasche 36 und der Nut 32 in letztere eingeführt werden. Die Abmessungen der Nut 32 und des Steges 30 sind so aufeinander abgestimmt, daß beim Anspannen des Ausgleichsstücks 20 an die Leiste 10 die gegenüberliegenden planparallelen Oberflächen 25, 26 des Ausgleichstücks 20 ebene Fortsetzungen der Oberflächen 15, 16 der Leiste 10 bilden. Das Anspannen des Ausgleichsstücks 20 an die Leiste 10 gelingt in der Weise, daß die Arretierbolzen 50, 54 in die Gewindelöcher 35 eingedreht werden, wobei zunächst die Unterseite der Ringe 52, 56 sich auf dem jeweiligen Boden der Ausnehmungen 7 in der Leiste 10 abstützen, sodann der Führungskörper 34 in die Tasche 36 hineingezogen wird, welcher durch Unterfassen des Steg-Querbalkens 31 den Steg 30 mit dem Ausgleichsstück 20 gegen die Seitenflächen 18, 19 solange anzieht, bis die Anlagefläche 24 gegen die Seitenflächen 18, 19 anliegt. Die Mittellinie der Paßbohrung 22 erstreckt sich dann exakt parallel zu den Mittellinien der ersten Paßbohrungen 11, 12, 14.

Selbstverständlich kann der Steg 30 auf einen im Querschnitt gleichgestalteten Zapfen reduziert sein.

Jedenfalls ist zu erkennen, daß das Ausgleichsstück 20 parallel zur Längskante 17 der Leiste 10 auf einen beliebigen Abstand zum Winkel 9 verschoben und dort arretiert werden kann. Dabei bleibt die Mittenverbindungslinie 27 der Paßbohrungen 14 und 22 stets parallel zur Mittenverbindungslinie 13 der ersten Paßbohrungen 11, 12, was allerdings nur ein bevorzugtes Merkmal der Erfindung ist. Es besteht auch die Möglichkeit, daß der Mittenabstand der ersten Paßbohrungen 11, 14 ein ganzzahliges Vielfaches des kleinsten Rastermaßes ist, während die Lage der Paßbohrung 22 zur Mittenverbindungslinie 13 bei an die Leiste 10 angeklemmtem Ausgleichsstück 20 davon verschieden sein kann. Wie ohne weiteres ersichtlich ist, können an die Leiste 10 unterschiedliche Ausgleichsstücke 20 angespannt werden, die sich in der Lage ihrer Paßbohrung 22 zur Mittenverbindungslinie 13 unterscheiden.

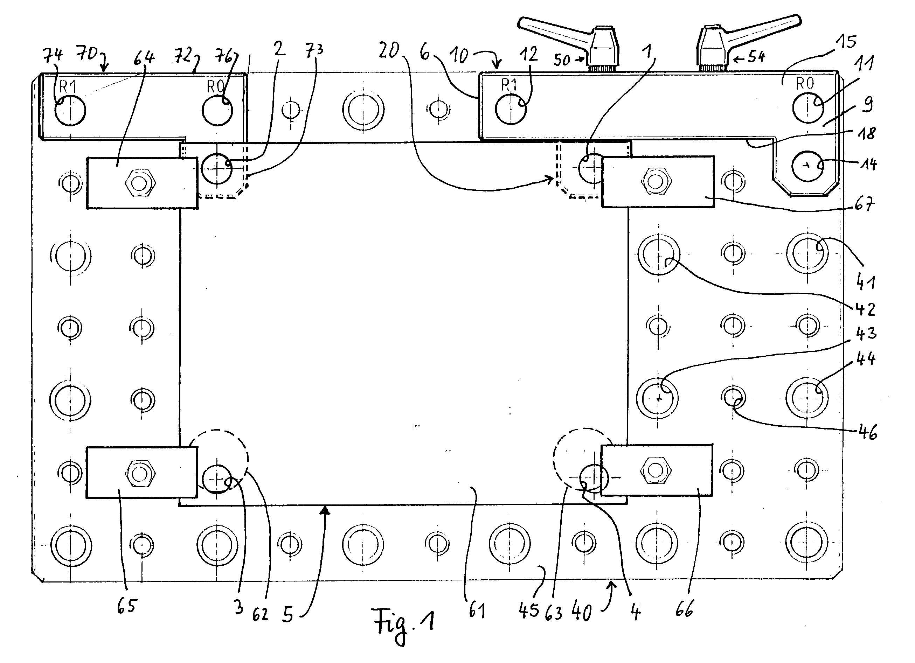

Die Erfindung gestattet das Palettieren einer mit Paßbohrungen 1, 2, 3, und 4 versehenen Normalienplatte 5 auf der Spannplatte 40, wobei der Mittenabstand benachbarter Paßbohrungen kein ganzzahliges Vielfaches des Rastermaßes der Spannplatte 40 ist. Den Mittenverbindungslinien der benachbarten Paßbohrungen 1...4 bilden zwar ein Rechteck, das seitenparallel zur seitlichen Begrenzung der Normalienplatte 5 liegt, jedoch ist der Mittenabstand benachbarter Paßbohrungen kein ganzzahliges Vielfaches des Rastermaßes der Spannplatte 40. Erfindungsgemäß wird zum Aufspannen der Normalienplatte 5, die bekanntermaßen zwei gegenüberliegende planparallele Oberflächen besitzt und von denen in Fig. 1 die Oberfläche 61 zu erkennen ist, die Leiste 10 auf der Spannplatte 40 festgespannt. Dazu dienen nicht dargestellte, aus der Gebrauchsmusterschrift G 87 00 670.7 bekannte Spreizbolzen, von denen je einer in die Paßbohrungen 11, 12 sowie die unmittelbar darunter ausgerichtet befindlichen Paßbohrungen der Spannplatte 40 eingesetzt und zur Festlegung der Leiste 10 gespreizt werden. So dann wird die Normalienplatte 5 auf das Ausgleichsstück 20 so aufgelegt, daß dessen Paßbohrung 22 mit einer der Paßbohrungen der Normalienplatte 5, also beispielsweise mit der Paßbohrung 1 fluchtet. An den weiteren Eckbereichen der Normalienplatte 5 können Präzisions-Abstandscheiben 62, 63, deren Höhe der Stärke der Leiste 10 gleicht, untergelegt werden. Als weitere Auflage für die Normalienplatte 5 kann ein noch zu beschreibender Ausgleichswinkel 70 dienen, der deren Festlegung mittels eines in die Paßbohrung 2 und in eine damit fluchtende Paßbohrung des Ausgleichswinkels 70 eingefügten Spreizbolzens geschehen kann. Ein weiterer Spreizbolzen wird in die Paßbohrung 1 und die mit dieser fluchtenden Paßbohrung 22 eingesetzt. In Fig. 1 sind weiterhin dargestellt vier Pratzen 64, 65, 66, 67, die auf die Spannplatte 40 aufgeschraubt werden und in an sich bekannter Weise durch Übegreifen über die Normalienplatte 5 diese auf der Spannplatte 40 zusätzlich festlegen.

Die Normalienplatte 5 ist somit über die benachbarten Paßbohrungen 1, 2 auf die Aufspannplatte 40 aufgespannt.

Man erkennt, daß auf entsprechende Weise eine andere Normalienplatte auf die Spannplatte 40 aufgespannt werden kann, deren Mittenabstand zweier benachbarter Paßbohrungen kleiner oder größer ist als der Mittenabstand der Paßbohrungen 1, 2. Dazu ist es lediglich erforderlich, daß durch Lösen der Arretierbolzen 50, 54 das Ausgleichsstück 20 längs der Leiste 10 entsprechend verschoben und in einer Lage neu arretiert wird, in der seine Paßbohrung 22 mit einer Paßbohrung der Normalienplatte fluchtet, wenn die dieser Paßbohrung benachbarte Paßbohrung der neuen Normalienplatte auf die Paßbohrung des Ausgleichswinkels ausgerichtet ist.

Zwar ist es grundsätzlich möglich, anstelle des erwähnten Ausgleichswinkels 70 eine weitere Leiste 10 mit zugehörigem Ausgleichsstück zu verwenden, um die Paßbohrung 2 mittels Spreizbolzens festzulegen. Für alle möglichen Mittenabstände der Paßbohrungen von Normalienplatten genügt es jedoch, den Ausgleichswinkel 70 zu benutzen, der einfacher gestaltet ist als die Leiste 10 und ohne verschiebbares Ausgleichsstück auskommt. Wie Fig. 4 und 5 zeigen, besitzt der Ausgleichswinkel 70 einen langen Schenkel 72, in welchen zwei in Richtung des langen Schenkels 72 beabstandete Paßbohrungen 74, 76 eingebracht sind, deren Mittenabstand einem ganzzahligen Vielfachen des Rastermaßes der Spannplatte 40 gleicht. Die Stärke und Breite des Schenkels 72 gleicht den entsprechenden Abmessungen der Leiste 10. Ferner liegt die Verbindungslinie der Mitten der Paßbohrungen 74, 76 in der Mitte zwischen zwei gegenüberliegenden Seitenflächen des Schenkels 72. Der kurze Schenkel 73 des Ausgleichswinkel 70 ist in seinem freien Endbereich mit einer weiteren Paßbohrung 78 versehen, wobei die Mittenverbindungslinie der Paßbohrung 78 mit der im Eckbereich des Ausgleichswinkels 70 vorgesehenen Paßbohrung 76 mit der Verbindungslinie der Paßbohrung 74, 76 einen rechten Winkel einschließt. Der Abstand der Mitte der Paßbohrung 78 zur Mitte der Paßbohrung 76 gleicht dem Abstand der Mitte der Paßbohrung 22 des Ausgleichsstücks 20 zur Mittenverbindungslinie 13. Es versteht sich ferner, daß der Ausgleicchswinkel 70 zwei gegenüberliegende, planparallele Oberflächen 75, 77 aufweist.

Bei dem Einsatz des Ausgleichswinkels 70 gemäß Fig. 1 wird die Normalienplatte 5 so auf den kurzen Schenkel 73 und das Ausgleichsstück 20 aufgelegt, daß zunächst die Paßbohrung 78 mit der Paßbohrung 2 fluchtet, so daß anschließend das Ausgleichsstück 20 so verschoben werden kann, daß seine Paßbohrung 22 mit der Paßbohrung 1 fluchtet.

Die Erfindung ist auf die Besonderheiten des Ausführungsbeispiels nicht beschränkt. So erkennt man leicht, daß statt der Normalienplatte 5 ein anderes Bauteil auf die Spannplatte 40 erfindungsgemäß aufgespannt werden kann, welches lediglich zwei Paßbohrungen entsprechend den Paßbohrungen 1, 2 zu besitzen braucht.

**Patentansprüche**

1. Leiste (10) zum maßgenauen Festlegen eines mit Paßbohrungen versehenen Bauteils auf einer mit Paßbohrungen versehenen Spannplatte, mit wenigstens zwei parallelen ersten Paßbohrungen (11, 12) von vorgegebenem Mittenabstand, dadurch gekennzeichnet, daß an der Leiste ein Ausgleichsstück (20) verschiebbar geführt und an die Leiste anspannbar ist, welches mit einer weiteren, zu den ersten Paßbohrungen (11, 12) parallelen Paßbohrung (22) versehen ist.

2. Leiste nach Anspruch 1, dadurch gekennzeichnet, daß das Ausgleichsstück (2) parallel zu der Mittenverbindungslinie (13) der beiden ersten Paßbohrungen (11, 12) verschiebbar an der Leiste (10) gehalten ist.

3. Leiste nach Anspruch 1 oder 2, dadurch gekennzeichnet, daß das Ausgleichsstück (20) eine axiale Stärke hat, die exakt gleich der Stärke der Leiste ist.

4. Leiste nach einem der vorstehenden Ansprüche, dadurch gekennzeichnet, daß das Ausgleichsstück zwei gegenüberliegende planparallele Oberflächen (25, 26) hat, die ebene Fortsetzungen gegenüberliegender planparalleler Oberflächen (15, 16) der Leiste sind.

5. Leiste nach einem der vorstehenden Ansprüche, dadurch gekennzeichnet, daß das Ausgleichsstück längs einer Längskante (17) der Leiste verschiebbar ist.

6. Leiste nach einem der vorstehenden Ansprüche, gekennzeichnet durch zwei einander gegenüberliegende planparallele Oberflächen (15, 16) und eine sich senkrecht zu den Oberflächen erstreckende Seitenfläche (18, 19), gegen welche das Ausgleichsstück mit einer ebenen, sich parallel zur Mittelinie der Paßbohrungen (11, 12) erstreckenden Seitenfläche (29) spannbar ist.

7. Leiste nach einem der vorstehenden Ansprüche, dadurch gekennzeichnet, daß aus einer Seitenfläche (29) des Ausgleichsstücks ein im Querschnitt T-förmiger Steg (30) vorsteht und daS die Leiste eine im Querschnitt T-förmige Nut (32) aufweist, die zu der dem Ausgleichsstück benachbarten Seitenfläche (18, 19) der Leiste zur Aufnahme des Steges offen ist.

8. Leiste nach Anspruch 7, dadurch gekennzeichnet, daß die Nut in einem Führungskörper (34) ausgebildet ist, der in einer zum Ausgleichsstück offenen Tasche (36) gehalten ist.

9. Leiste nach Anspruch 8, dadurch gekennzeichnet, daß die Tiefe der Tasche (36) größer ist als die Tiefe des Führungskörpers (34), und daß wenigstens ein Arretierbolzen (50, 60) für das Ausgleichsstück vorgesehen ist, welcher sich auf der Leiste abstützt und in ein Gewinde (35) im Führungskörper eingreift.

10. Leiste nach einem der Ansprüche 7 bis 9, dadurch gekennzeichnet, daß die Nut (32) an einer ihrer Längsseiten nach außen offen ist.

11. Leiste nach einem der vorstehenden Ansprüche mit Ausgleichswinkel, längs dessen einem Schenkel (72) zwei beabstandete Paßbohrungen (74, 76) eingebracht sind, und in dessen anderem Schenkel eine weitere Paßbohrung (78) vorgesehen ist, wobei die Verbindungslinie der Paßbohrungen (74, 76) senkrecht auf der Verbindungslinie der weiteren Paßbohrung (78) mit der benachbarten Paßbohrung (76) steht und der Mittenabstand der weiteren Paßbohrung (78) zur Mitte der benachbarten Paßbohrung (76) gleich dem Mittenabstand der weiteren Paßbohrung (22) des Ausgleichsstücks zur Mittenverbindungslinie der ersten Paßbohrungen (11, 12) ist.

## Claims

1. A bar (10) for fixing, accurately to dimensions, a component, provided with fitting bores, on a clamping plate provided with fitting bores, having at least two parallel first fitting bores (11, 12) of predetermined centre-to-centre distance, characterised in that a compensating piece (20) is displaceably guided on the bar and is clampable to the bar and is provided with a further fitting bore (22) parallel to the first fitting bores (11, 12).

2. A bar as claimed in claim 1, characterised in that the compensating piece (2) is held on the bar (10) so as to be displaceable parallel to the line (13) connecting the centres of the two first fitting bores (11, 12).

3. A bar as claimed in claim 1 or 2, characterised in that the compensating piece (20) has an axial thickness which is exactly equal to the thickness of the bar.

4. A bar as claimed in one of the preceding claims, characterised in that the compensating piece has two mutually oppositely located plane parallel surfaces (25, 26) which are planar continuations of mutually oppositely located plane parallel surfaces (15, 16) of the bar.

5. A bar as claimed in one of the preceding claims, characterised in that the compensating piece is displaceable along a longitudinal edge (17) of the bar.

6. A bar as claimed in one of the preceding claims, characterised by two mutually oppositely located plane parallel surfaces (15, 16) and a side face (18, 19) which extends at right angles to the surfaces and against which a planar side face (29) of the compensating piece extending parallel to the centre line of the fitting bores (11, 12) is clampable.

7. A bar as claimed in one of the preceding claims, characterised in that a rib (30) of T-shaped cross section projects from a side face (29) of the compensating piece, and that the bar has a groove (32) of T-shaped cross section which is open towards the side face (18, 19) of the bar adjacent to the compensating piece for the purpose of receiving the rib.

8. A bar as claimed in claim 7, characterised in that the groove is formed in a guide body (34) which is held in a pocket (36) open towards the compensating piece.

9.  A bar as claimed in claim 8, characterised in that the depth of the pocket (36) is greater than the depth of the guide body (34), and than at least one locking bolt (50, 60) for the compensating piece is provided and is supported on he bar and engages a screw thread (35) in the guide body.

10. A bar as claimed in one of the claims 7 to 9, characterised in that the groove (32) is open outwardly on one of its longitudinal sides.

11. A bar as claimed in one of the preceding claims, having a compensating angled member along one limb (72) of which are provided two spaced fitting bores (74, 76) and in the other limb of which is provided a further fitting bore (78), wherein the line connecting the fitting bores (74, 76) is at right angles to the line connecting the further fitting bore (78) to the adjacent fitting bore (76), and the distance between the centre of the further fitting bore (78) and the centre of the adjacent fitting bore (76) is equal to the distance between the centre of the further fitting bore (22) of the compensating piece and the line connecting the centres of the first fitting bores (11, 12).

**Revendications**

1.  Listel (10) pour la fixation conforme aux dimensions d'un composant muni de perçages d'ajustage sur un dispositif de fixation muni de perçages d'ajustage, avec au moins deux premiers perçages d'ajustement parallèles (11, 12) d'entraxe prédéterminé, caractérisé en ce qu'une pièce de compensation (20) guidée décalable sur le listel et pouvant être fixée sur le listel est munie d'un autre perçage d'ajustage (22) parallèle aux premiers perçages d'ajustage (11, 12).

2.  Listel selon la revendication 1, caractérisé en ce que la pièce de compensation (20) est maintenue décalable sur le listel (10) parallèlement à la ligne de liaison des centres (13) des deux premiers perçages d'ajustage (11, 12).

3.  Listel selon l'une des revendications 1 ou 2, caractérisé en ce que la pièce de compensation (20) a une épaisseur axiale qui est exactement égale à l'épaisseur du listel.

4.  Listel selon l'une des revendications précédentes, caractérisé en ce que la pièce de compensation a deux surfaces à faces planes et parallèles opposées (25, 26) qui sont des prolongements plans de surfaces à faces planes et parallèles opposées (15, 16) du listel.

5.  Listel selon l'une des revendications précédentes, caractérisé en ce que la pièce de compensation est décalable le long d'un bord longitudinal (17) du listel.

6.  Listel selon l'une des revendications précédentes, caractérisé par deux surfaces à faces planes et parallèles opposées l'une à l'autre (15, 16) et une surface latérale (18, 19) s'étendant perpendiculairement aux surfaces, contre lesquelles peut être fixée la pièce de compensation avec une surface plane latérale (29) s'étendant parallèlement à la ligne médiane des perçages d'ajustage (11, 12).

7.  Listel selon l'une des revendications précédentes, caractérisé en ce qu'une entretoise de section en forme de T (30) dépasse d'une surface latérale (29) de la pièce de compensation et en ce que le listel présente une rainure de section en forme de T (32), qui est ouverte vers la surface latérale voisine de la pièce de compensation (18, 19) du listel pour recevoir l'entretoise.

8.  Listel selon la revendication 7, caractérisé en ce que la rainure est formée dans un corps de guidage (34) qui est maintenu dans une poche (36) ouverte vers la pièce de compensation.

9.  Listel selon la revendication 8, caractérisé en ce que la profondeur de la poche (36) est plus grande que la profondeur du corps de guidage (34) et en ce qu'au moins un boulon d'arrêt (50, 60) est prévu pour la pièce de compensation, qui s'appuie sur le listel et s'engage dans un taraudage (35) dans le corps de guidage.

10. Listel selon l'une des revendications 7 à 9, caractérisé en ce que la rainure (32) est ouverte vers l'extérieur sur l'un de ses côtés longitudinaux.

11. Listel selon l'une des revendications précédentes, avec équerre de compensation le long d'une branche de laquelle (72) sont logés deux perçages d'ajustage écartés (74, 76) et dans l'autre branche de laquelle est prévu un autre perçage d'ajustage (78), la ligne de liaison des perçages d'ajustage (74, 76) étant perpendiculaire sur la ligne de liaison de l'autre perçage d'ajustage (78) avec l'autre perçage d'ajustage (76) et l'entraxe de l'autre perçage d'ajustage (78) par rapport au centre du perçage d'ajustage voisin (76) étant égal à l'entraxe de l'autre perçage d'ajustage (22) de la pièce de compensation par rapport à la ligne de liaison des centres des premiers perçages d'ajustage (11, 12).

Fig. 1

EP 0 342 256 B1

Fig. 2

Fig. 3

Fig. 4

Fig. 5

system 3R

system 3R

EP 0 342 256 B1